# EUROPÄISCHE PATENTSCHRIFT

(11) **EP 2 646 293 B1**
(45) Veröffentlichungstag und Bekanntmachung des Hinweises auf die Patenterteilung: **25.05.2016**
(21) Anmeldenummer: 11769861.3
(22) Anmeldetag: 12.10.2011
(51) Int. Cl.: B60S 1/38, B65D 75/32

(54) **VERPACKUNGSVORRICHTUNG, INSBESONDERE FÜR EIN WISCHBLATT**
PACKAGING DEVICE, IN PARTICULAR FOR A WIPER BLADE
DISPOSITIF D'EMBALLAGE, EN PARTICULIER POUR UN BALAI D'ESSUIE-GLACE

(30) Priorität: 01.12.2010 DE 102010062269
(43) Veröffentlichungstag der Anmeldung: 09.10.2013
(73) Patentinhaber: Robert Bosch GmbH, 70442 Stuttgart (DE)
(72) Erfinder: MUELLER, Asmus, CH-2544 Bettlach (CH)
(86) Internationale Anmeldenummer: PCT/EP2011/067764
(87) Internationale Veröffentlichungsnummer: WO 2012/072321

(56) Entgegenhaltungen:
- EP-A1- 1 512 593
- DE-A1- 19 951 971
- FR-A1- 2 859 713
- FR-A1- 2 875 486
- FR-A1- 2 921 641

## Beschreibung

Die Erfindung geht aus von einer Wischblattverpackungsvorrichtung nach dem Oberbegriff des Anspruchs 1.

### Stand der Technik

Es ist bereits eine Wischblattverpackungsvorrichtung, die zumindest einen Wischlippenaufnahmekörper aufweist, welcher zumindest einen Wischlippenaufnahmebereich und zumindest eine erste wischlippenseitige Auflagefläche aufweist, und die zu einer offenen Lagerung eines Wischblatts vorgesehen ist, bekannt.

### Offenbarung der Erfindung

Die Erfindung geht aus von einer Wischblattverpackungsvorrichtüng, die zumindest einen Wischlippenaufnahmekörper aufweist, welcher zumindest einen Wischlippenaufnahmebereich und zumindest eine erste wischlipperiseitige Auflagefläche aufweist, und die zu einer offenen Lagerung eines Wischblatts vorgesehen ist.

EP-A-1 512 593 offenbart den Oberbegriff des Anspruchs 1.

Es wird vorgeschlagen, dass die Wischblattverpackungsvorrichtung zumindest einen Abstützkörper aufweist, der zumindest eine Gegenanschlagfläche zur ersten Auflagefläche bildet, und zumindest ein erstes Verbindungselement umfasst, das in zumindest einem Betriebszustand die erste Auflagefläche mit der Gegenanschlagfläche koppelt. Durch eine dementsprechende Ausgestaltung der Erfindung können besonders vorteilhaft Bauteile, Gewicht, Montageaufwand und Herstellungskosten der Wischblattverpackungsvorrichtung ohne Stabilitätseinbußen eingespart werden. Unter einem "Wischlippenaufnahmekörper" soll in diesem Zusammenhang insbesondere ein Körper verstanden werden, der dazu vorgesehen ist, wenigstens einen Teil einer Wischlippe eines Wischblatts zumindest teilweise aufzunehmen, d.h. zumindest teilweise zu umschließen und/oder vor Beschädigungen zu schützen. Unter einem "Wischtippenaufnahmebereich" soll in diesem Zusammenhang insbesondere ein Bereich des Wischlippenaufnahmekörpers verstanden werden, in welchem zumindest ein Teil einer Wischlippe eines Wischblatts in zumindest einem Betriebszustand zumindest teilweise angeordnet ist. Unter einer "wischlippenseitigen Auflagefläche" soll in diesem Zusammenhang insbesondere eine Fläche verstanden werden, die dazu vorgesehen ist, eine Kraft eines Wischblatts in zumindest einem Betriebszustand aufzunehmen, wie insbesondere eine Spann- und/oder Lagerkraft, und zwar insbesondere eine Kraft, die zumindest eine wesentliche Kraftkomponente aufweist, die von einer Mittelachse des Wischblatts in Richtung eines freien Endes der Wischlippe gerichtet ist. Unter einer "offenen Lagerung" soll in diesem Zusammenhang insbesondere eine Lagerung verstanden werden, bei der weniger als 90 %, bevorzugt weniger als 70 % und besonders bevorzugt weniger als 40 % einer Gesamtlängserstreckung der Wischblattverpackungsvorrichtung, in einer Längsrichtung betrachtet, radial vollständig umschlossen sind. Ganz besonders bevorzugt ist der Wischlippenaufnahmekörper, in Längsrichtung betrachtet, an jeder Stelle radial unvollständig umschlossen. Unter einer "Längsrichtung" soll in diesem Zusammenhang insbesondere eine Richtung verstanden werden, die im Wesentlichen parallel zu einer Haupterstreckungsrichtung des Wischlippenaufnahmekörpers verläuft. Unter "im Wesentlichen" soll in diesem Zusammenhang insbesondere eine Abweichung von weniger als 20°, bevorzugt von weniger als 10°, verstanden werden. Unter einem "Abstützkörper" soll in diesem Zusammenhang insbesondere ein Körper verstanden werden, der dazu vorgesehen ist, eine Kraft eines Wischblatts aufzunehmen und an zumindest ein Verbindungselement abzuleiten. Unter einem "Verbindungselement" soll in diesem Zusammenhang insbesondere ein Element verstanden werden, das dazu vorgesehen ist, eine Aktions- und eine Reaktionskraft zwischen dem Abstützkörper und dem Wischlippenaufnahmekörper aufzunehmen und/oder weiterzuleiten. Unter "koppeln" soll dabei insbesondere form-, kraft und/oder stoffschlüssig verbinden verstanden werden.

Ist das zumindest eine Verbindungselement als Haltebügel ausgebildet, kann eine einfache Konstruktion bei geringem Materialbedarf erzielt werden. Unter einem "Haltebügel" soll in diesem Zusammenhang insbesondere ein Bügel verstanden werden, der sich, in Längsrichtung betrachtet, über weniger als 70 %, bevorzugt über weniger als 30 % und besonders bevorzugt über weniger als 10 % einer Gesamtlängserstreckung des Wischlippenaufnahmekörpers erstreckt. Ganz besonders bevorzugt weist der Haltebügel, in Längsrichtung betrachtet, ein hauptsächlich L-förmiges und/oder U-förmiges Profil auf, d.h. zumindest zwei Wandungen, die einen Winkel von im Wesentlichen 90° einschießen.

In einer weiteren Ausgestaltung wird vorgeschlagen, dass das zumindest eine Verbindungselement in einem Zentralbereich des Wischlippenaufnahmekörpers angeordnet ist, wodurch eine besonders sichere Lagerung eines Wischblatts erreicht werden kann. Unter einem "Zentralbereich" soll in diesem Zusammenhang insbesondere ein Bereich verstanden werden, welcher sich, in einer Längsrichtung betrachtet, in zwei mittleren Vierteln, bevorzugt in einem mittleren Drittel des Wischlippenaufnahmekörpers, befindet.

Ferner wird vorgeschlagen, dass die Wischblattverpackungsvorrichtung ein zweites Verbindungselement aufweist, das vom ersten Verbindungselement durch einen Zwischenbereich beabstandet ist, wodurch ein Wischblatt zusätzlich gesichert werden kann. Nach der Erfindung ist der Zwischenbereich dazu vorgesehen, einen an einem Wischblatt befestigten Wischblattadapter aufzunehmen, wodurch eine zuverlässige Sicherung des Wischblattadapters eines Wischblatts erreicht werden kann.

Ist der zumindest eine Wischlippenaufnahmekörper von einer lang gestreckten nutbildenden Schiene gebildet, können damit Herstellungskosten eingespart werden. Unter "lang gestreckt" soll dabei in diesem Zusammenhang insbesondere verstanden werden, dass eine in Längsrichtung verlaufende Gesamtlängserstreckung der Schiene mehr als viermal so groß ist, bevorzugt mehr als zehnmal so groß ist wie eine Gesamtquererstreckung, die senkrecht zur Längserstreckung verläuft. Unter einer "nutbildenden Schiene" soll in diesem Zusammenhang insbesondere eine Schiene verstanden werden, die ein hauptsächlich V-förmiges und/oder U-förmiges Profil und/oder bevorzugt eine Nut aufweist.

Sind der zumindest eine Wischblattaufnahmekörper und das zumindest eine Verbindungselement und/oder das zumindest eine Verbindungselement und der zumindest eine Abstützkörper einstückig ausgebildet, können zusätzliche Verbindungselemente vorteilhaft vermieden werden. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Ferner kann Gewicht eingespart werden, wenn der zumindest eine Wischlippenaufnahmekörper eine zweite wischlippenseitige Auflagefläche zu einer Lagerung eines Wischblatts aufweist, die von der ersten Auflagefläche durch einen auflagefreien Teilbereich getrennt ist. Unter einem "auflagefreien Teilbereich" soll in diesem Zusammenhang insbesondere ein Bereich verstanden werden, in dem die Auflagefläche vom Wischblatt räumlich getrennt ist und/oder die Auflagefläche frei von Auflagekräften ist.

Eine besonders stabile Ausgestaltung kann erreicht werden, wenn zumindest eine der Gegenanschlagflächen in einer Längsrichtung versetzt zu zumindest einer der Auflageflächen angeordnet ist. Unter "versetzt" soll in diesem Zusammenhang insbesondere verstanden werden, dass zumindest eine senkrecht zur Längsrichtung verlaufende Schnittebene existiert, die nur eine der Auflageflächen oder nur eine der Gegenanschlagflächen schneidet, und bevorzugt dass zumindest eine senkrecht zur Längsrichtung verlaufende Schnittebene existiert, die keine der Auflageflächen und keine der Gegenanschlagflächen schneidet, also schnittfrei ist.

Weist der Wischlippenaufnahmekörper zumindest zwei unterschiedliche Wandstärken auf, kann eine weitere Einsparung an Material erzielt werden. Unter "unterschiedlichen Wandstärken" sollen in diesem Zusammenhang insbesondere Wandstärkenunterschiede von mehr als 50 %, bevorzugt mehr als 100 %, besonders bevorzugt mehr als 200 % verstanden werden.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht einer Wischblattverpackungsvorrichtung mit einem Wischblatt in einem montierten Zustand,
- Fig. 2: einen Schnitt entlang der Linie II - II in Figur 1,
- Fig. 3: einen Schnitt entlang der Linie III - III in Figur 1,
- Fig. 4: eine Seitenansicht eines weiteren Ausführungsbeispiels einer Wischblattverpackungsvorrichtung mit einem Wischblatt in einem montierten Zustand,
- Fig. 5a: einen Schnitt entlang der Linie V - V in Figur 4 mit geöffneter Seitenabdeckung,
- Fig. 5b: einen Schnitt entlang der Linie V - V in Figur 4 mit geschlossener Seitenabdeckung,
- Fig. 6: eine Seitenansicht eines weiteren Ausführungsbeispiels einer Wischblattverpackungsvorrichtung mit einem Wischblatt in einem ersten Montageschritt,
- Fig. 7: eine Seitenansicht des Ausführungsbeispiels einer Wischblattverpackungsvorrichtung mit einem Wischblatt aus Figur 6 in einem montierten Zustand und
- Fig. 8: einen Schnitt entlang der Linie VIII - VIII in Figur 7.

### Beschreibung der Ausführungsbeispiele

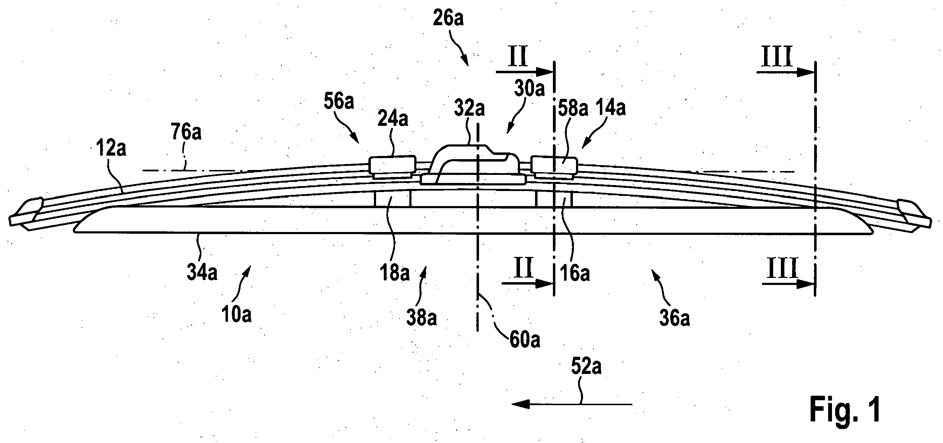

Figur 1 zeigt eine Seitenansicht einer erfindungsgemäßen Wischblattverpackungsvorrichtung mit einem biegeweichen Wischblatt 12a in einem montierten Zustand. Das Wischblatt 12a liegt auf einer ersten und zweiten wischlippenseitige Auflagefläche 20a, 42a eines Wischlippenaufnahmekörpers 10a der Wischblattverpackungsvorrichtung auf. Der Wischlippenaufnahmekörper 10a ist, in einer Längsrichtung 52a betrachtet, die sich im Wesentlichen parallel zu einer Haupterstreckungsrichtung des Wischlippenaufnahmekörpers 10a erstreckt, an jeder Stelle radial unvollständig umschlossen und somit offen gelagert.

Der Wischlippenaufnahmekörper 10a ist als eine lang gestreckte nutbildende Schiene 34a ausgeformt. Die Schiene 34a besteht aus einem Kunststoff. Ein Fachmann wird in diesem Zusammenhang verschiedene, als sinnvoll erscheinende Kunststoffe in Erwägung ziehen, wie insbesondere Polyethylen, Polypro- . pylen, Polyamid, Polyvinylchlorid und/oder Polystyrol. Die Auflageflächen 20a, 42a sind einer Wischlippe 54a des Wischblatts 12a zugewandt. Am Wischlippenaufnahmekörper 10a sind ein erstes und ein zweites Verbindungselement 16a, 18a angeordnet, an denen jeweils ein Abstützkörper 14a, 56a angeformt ist.

Die Verbindungselemente 16a, 18a sind jeweils als Haltebügel 24a, 58a ausgebildet. Die Haltebügel 24a, 58a erstrecken sich jeweils, in Längsrichtung 52a betrachtet, etwa 5 % entlang einer Gesamtlängserstreckung des Wischlippenaufnahmekörpers 10a. Die Haltebügel 24a, 58a weisen ferner, in Längsrichtung 52a betrachtet, ein im Wesentlichen L-förmiges Profil auf.

Das zweite Verbindungselement 18a ist vom ersten Verbindungselement 16a durch einen Zwischenbereich 30a beabstandet. In dem Zwischenbereich 30a ist in einem montierten Zustand ein an dem Wischblatt 12a befestigter Wischblattadapter 32a angeordnet.

Die Verbindungselemente 16a, 18a sind in einem Zentralbereich 26a des Wischlippenaufnahmekörpers 10a angeordnet. Wird der Wischlippenaufnahmekörper 10a in Längsrichtung 52a in drei gleich große Abschnitte unterteilt, erstreckt sich der Zentralbereich 26a innerhalb eines mittleren Abschnitts der drei Abschnitte.

Der Wischlippenaufnahmekörper 10a weist zusammen mit den Verbindungselementen 16a, 18a und den Abstützkörpern 14a, 56a eine Symmetrieebene 60a auf, die sich senkrecht zur Längsrichtung 52a erstreckt. Parallel zur Längsrichtung 52a verläuft eine Mittelachse 76a durch ein Zentrum des Wischblatts 12a.

Die Abstützkörper 14a, 56a weisen jeweils eine Gegenanschlagfläche 22a zur wischlippenseitigen Auflagefläche 20a, 42a auf, gegen die sich das Wischblatt 12a abstützt. Die Gegenanschlagflächen 22a sind den Auflageflächen 20a, 42a zugewandt. Die Auflageflächen 20a, 42a sind in Längsrichtung 52a des Wischlippenaufnahmekörpers 10a zu den Gegenanschlagflächen 22a versetzt angeordnet.

Die erste und zweite Auflagefläche 20a, 42a sind voneinander beabstandet und durch einen auflagefreien Teilbereich 38a des Wischlippenaufnahmekörpers 10a getrennt. Der auflagefreie Teilbereich 38a grenzt sowohl an die erste als auch an die zweite Auflagefläche 20a, 42a des Wischlippenaufnahmekörpers 10a an. Innerhalb des auflagefreien Teilbereichs 38a ist das Wischblatt 12a vom Wischlippenaufnahmekörper 10a beabstandet. Der Wischlippenaufnahmekörper 10a ist im Teilbereich 38a frei von Auflagekräften des Wischblatts 12a.

Das Wischblatt 12a weist in einem unmontierten, entlasteten Zustand eine stärkere Krümmung auf, als in dem gezeigten montierten Zustand. Dadurch übt das Wischblatt 12a im montierten, belasteten Zustand eine ständige Kraft auf die AufIageflächen 20a, 42a und auf die Gegenanschlagflächen 22a aus. Die Kraft, die vom Wischblatt 12a auf die Auflageflächen 20a, 42a wirkt, ist im Wesentlichen entgegengesetzt zur Kraft, die vom Wischblatt 12a auf die Gegenanschlagfläche 22a wirkt.

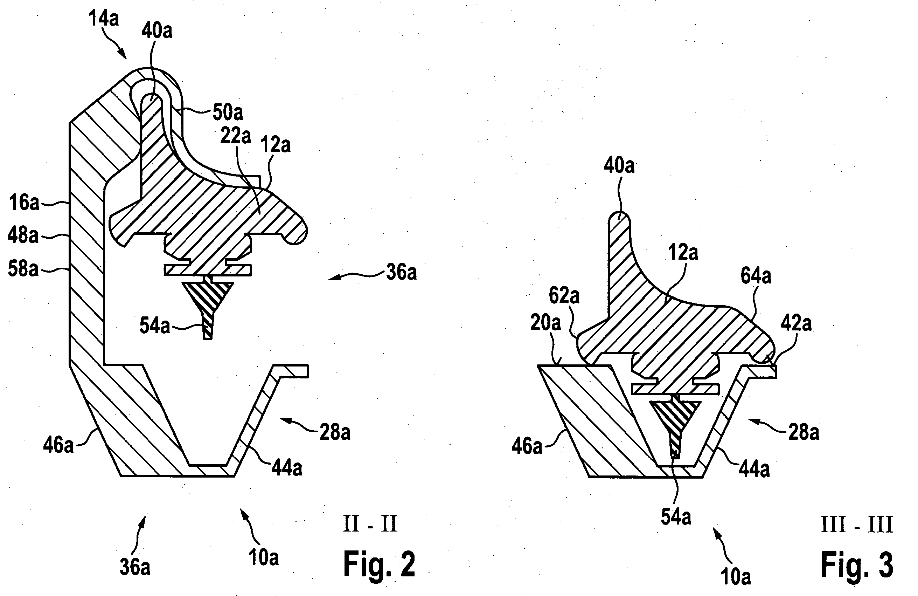

Figur 2 zeigt das Verbindungselement 16a mit dem Abstützkörper 14a in einem Schnitt entlang der Linie II - II in Figur 1. Der Wischlippenaufnahmekörper 10a, das Verbindungselement 16a und der Abstützkörper 14a sind durch ein Mehrkomponentenspritzverfahren einstückig miteinander ausgebildet, wodurch das Verbindungselement 16a die Auflagefläche 20a mit der Gegenanschlagfläche 22a dauerhaft koppelt. Es ist in diesem Zusammenhang jedoch auch denkbar, dass ein Fachmann den Wischlippenaufnahmekörper 10a, das Verbindungselement 16a und/oder den Abstützkörper 14a getrennt voneinander ausbildet und in einem montierten Zustand lösbar miteinander verbindet.

Das Wischblatt 12a weist ein Windabweiserelement 40a auf, das sich gegen den Abstützkörper 14a abstützt. Ferner übt das Wischblatt 12a eine Spannkraft gegen die Gegenanschlagfläche 22a aus, an der es mit dem Windabweiserelement 40a im Wesentlichen bündig anliegt. Eine Bewegung des Wischblatts 12a relativ zum Verbindungselement 16a wird durch einen von der Spannkraft gebildeten Kraftschluss vermieden.

Der Wischlippenaufnahmekörper 10a, das Verbindungselement 16a und der Abstützkörper 14a weisen eine Vielzahl unterschiedlicher Wandstärken auf. Eine erste Wandung 44a, die den Wischlippenaufnahmekörper 10a zu einer Durchtrittsöffnung hin abschließt, weist eine etwa fünfmal geringere Wandstärke auf als eine zweite Wandung 46a, die den Wischlippenaufnahmekörper 10a zum Verbindungselement 16a hin abschließt. Die erste Wandung 44a bildet mit der zweiten Wandung 46a im Wesentlichen ein V-Profil.

An die zweite Wandung 46a schließt eine dritte Wandung 48a des Verbindungselements 16a an, deren Wandstärke etwa halb so groß ist wie die der zweiten Wandung 46a. Der Abstützkörper 14a weist eine vierte Wandung 50a auf, die an die dritte Wandung 48a angeformt ist. Die vierte Wandung 50a weist ein im Wesentlichen S-förmiges Profil auf, das zumindest teilweise mit einem Profil des Windabweiserelements 40a übereinstimmt. Eine Wandstärke der vierten Wandung 50a ist etwa dreimal geringer als die Wandstärke der dritten Wandung 48a.

Der dritten Wandung 48a gegenüberliegend ist eine Seitenöffnung 36a zur Durchführung des Wischblatts 12a angeordnet, was für eine Montage oder Demontage notwendig ist.

In Figur 3 ist ein Schnitt entlang der Linie III - III in Figur 1 dargestellt. Das Wischblatt 12a liegt mit zwei Vorsprüngen 62a, 64a auf der Auflagefläche 20a, 42a auf. Dabei übt das Wischblatt 12a eine Auflagekraft aus, die im Wesentlichen entgegengesetzt zur Spannkraft gerichtet ist.

Die am Wischblatt 12a angeformte Wischlippe 54a ist innerhalb eines Wischlippenaufnahmebereichs 28a des Wischlippenaufnahmekörpers 10a angeordnet und wird dort vor äußeren Einwirkungen, wie Schmutz oder Berührungen, geschützt.

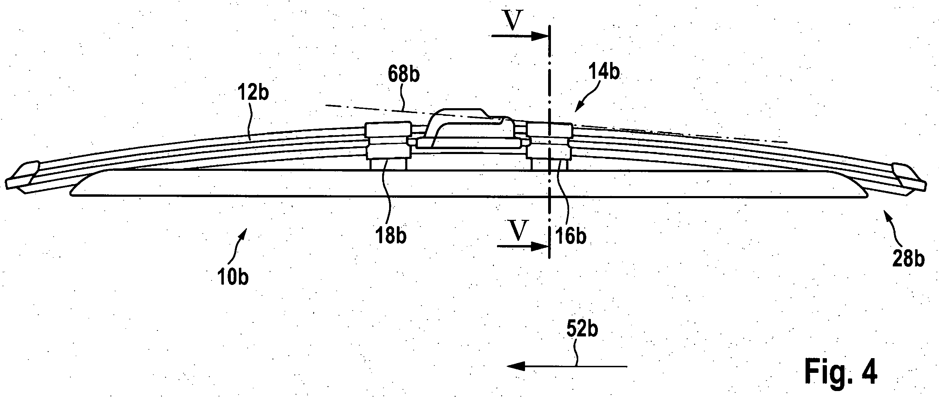

In den Figuren 4 bis 8 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in den Figuren 1 bis 3 durch die Buchstaben b und c in den Bezugszeichen der Ausführungsbeispiele der Figuren 4 bis 8 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Figur 4 zeigt ein weiteres Ausführungsbeispiel einer Wischblattverpackungsvorrichtung mit einem Wischlippenaufnahmekörper 10b und einem Wischblatt 12b, das in einem Wischlippenaufnahmebereich 28b angeordnet ist, in einer Seitenansicht. Am Wischlippenaufnahmekörper 10b sind ein erstes und ein zweites Verbindungselement 16b, 18b angeformt. Die Anordnung des Wischblatts 12b an dem Wischlippenaufnahmekörper 10b entspricht im Wesentlichen der Anordnung aus dem ersten Ausführungsbeispiel.

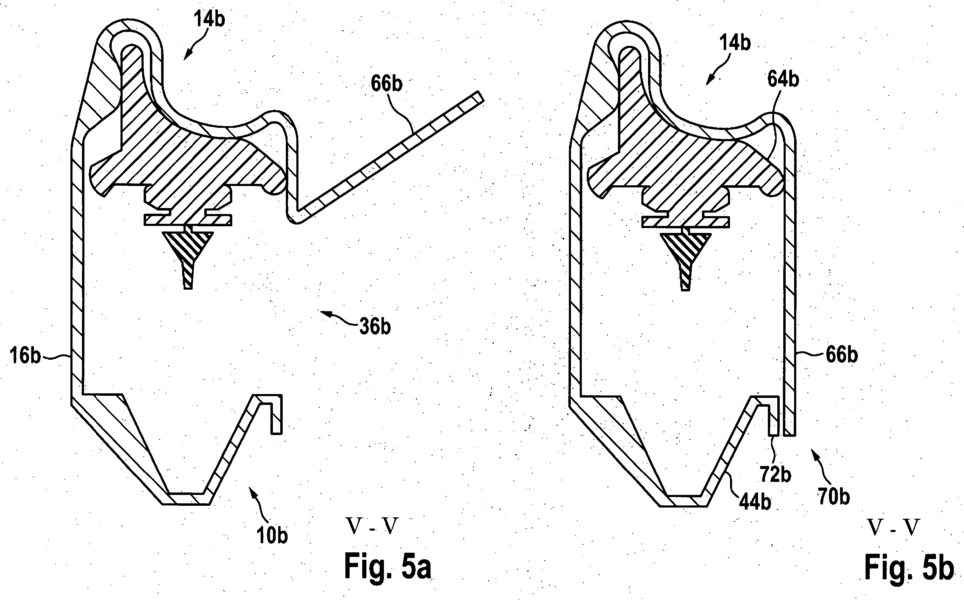

Figur 5a zeigt einen Schnitt durch das Verbindungselement 16b entlang der Linie V - V in Figur 4. Am Verbindungselement 16b ist ein Abstützkörper 14b angeordnet. Das Verbindungselement 16b ist mit dem Abstützkörper 14b einstückig ausgebildet.

Am Abstützkörper 14b ist eine um eine Schwenkachse 68b schwenkbar gelagerte Abdeckklappe 66b angeordnet, die sich in einem geöffneten Zustand befindet. In dem geöffneten Zustand weist die Wischblattverpackungsvorrichtung eine Seitenöffnung 36b auf, durch die das Wischblatt 12b für eine Montage oder Demontage geführt werden kann. Die Schwenkachse 68b verläuft im Wesentlichen parallel zu einer Längsrichtung 52b des Wischlippenaufnahmekörpers 10b.

Figur 5b zeigt einen Schnitt durch das Verbindungselement 16b entlang der Linie V - V in Figur 4. Die Abdeckklappe 66b befindet sich in einem geschlossenen Zustand und schließt in einem Endbereich 70b bündig mit einem Fortsatz 72b einer ersten Wandung 44b des Wischlippenaufnahmekörpers 10b ab. Die Abdeckklappe 66b stützt das Wischblatt 12b an einem Vorsprung 64b ab.

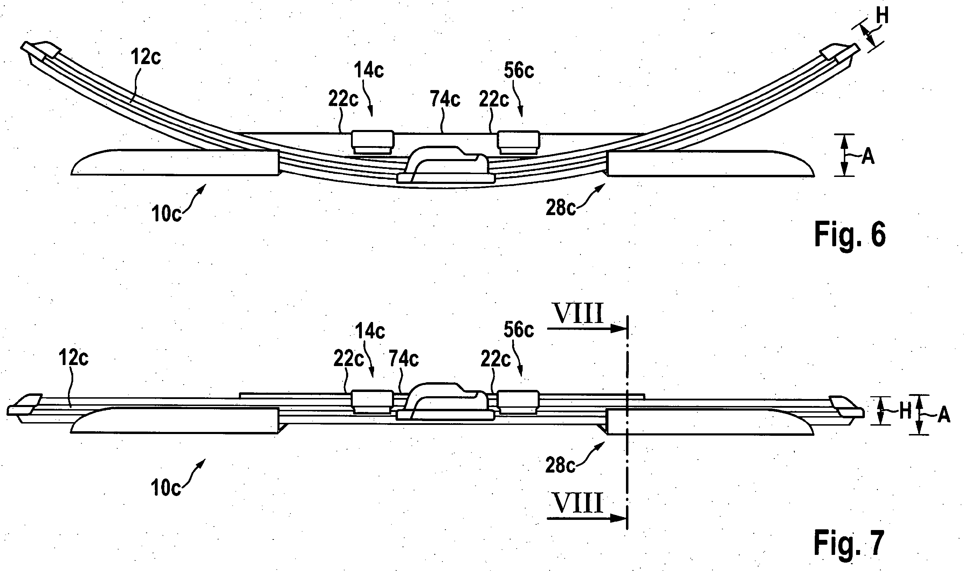

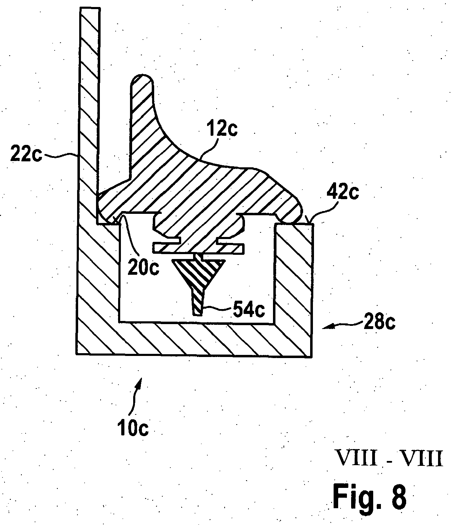

Figur 6 zeigt eine Seitenansicht eines weiteren Ausführungsbeispiels einer Wischblattverpackungsvorrichtung mit einem Wischblatt 12c, das in einem Wischlippenaufnahmebereich 28c angeordnet ist, in einem ersten Montageschritt. Ein Wischlippenaufnahmekörper 10c ist dabei mit einem Verbindungselement 16c einstückig ausgebildet, das einen lang gestreckten leistenartigen Zwischensteg 74c aufweist. Der Zwischensteg 74c verbindet eine erste Auflagefläche 20c mit einer zweiten Auflagefläche 42c (Figur 8). Am Zwischensteg 74c sind ferner ein erster und ein zweiter Abstützkörper 14c, 56c einstückig ausgebildet.

An den Abstützkörpern 14c, 56c sind Gegenanschlagflächen 22c angeordnet. Ein vertikaler Abstand A zwischen den Auflageflächen 20c, 42c und den Gegenanschlagflächen 22c ist im Wesentlichen, d.h. mit einer Abweichung von weniger als 10 %, identisch mit einer Höhe H des Wischblatts 12c.

Figur 7 zeigt die Wischblattverpackungsvorrichtung aus Figur 6 in einem montierten Zustand. Da der Abstand zwischen den Auflageflächen 20c, 42c und den Gegenanschlagflächen 22c im Wesentlichen der Höhe H des Wischblatts 12c entspricht, befindet sich das Wischblatt 12c in einem vollständig gestreckten Zustand, d.h. das Wischblatt 12c weist, in einer Längsrichtung 52c betrachtet, keine Krümmung mehr auf.

Figur 8 zeigt einen Schnitt durch den Wischlippenaufnahmekörper 10c entlang der Linie VIII - VIII in Figur 7. Das Wischblatt 12c liegt auf den Auflageflächen 20c und 42c auf. Eine Wischlippe 54c ist innerhalb des Wischlippenaufnahmebereichs 28c angeordnet.

## Patentansprüche

1. Wischblattverpackungsvorrichtung, die zumindest einen Wischlippenaufnahmekörper (10a - 10c) aufweist, welcher zumindest einen Wischlippenaufnahmebereich (28ä - 28c) und zumindest eine erste wischlippenseitige Auflagefläche (20a - 20c) aufweist, und die zu einer offenen Lagerung eines Wischblatts (12a -12c) vorgesehen ist, **gekennzeichnet durch** zumindest einen ersten und einen zweiten Abstützkörper (14a -14c, 56a - 56c), die jeweils zumindest eine Gegenanschlagfläche (22a - 22c) zur ersten Auflagefläche (20a - 20c) bilden, und zumindest ein erstes und ein zweites Verbindungselement (16a - 16c, 18a - 18c), die in zumindest einem Betriebszustand die erste Auflagefläche (20a - 20c) mit den Gegenanschlagflächen (22a - 22c) koppeln, wobei das zweite Verbindungselement (18a) vom ersten Verbindungselement (16a) **durch** einen Zwischenbereich (30a) beabstandet ist, der dazu vorgesehen ist, einen an einem Wischblatt (12a) befestigten Wischblattadapter (32a) aufzunehmen.

2. Wischblattverpackungsvorrichtung nach Anspruch 1, **dadurch gekennzeichnet, dass** das zumindest eine Verbindungselement (16a) als Haltebügel ausgebildet ist.

3. Wischblattverpackungsvorrichtung nach Anspruch 1 oder 2, **dadurch gekennzeichnet, dass** das zumindest eine Verbindungselement (16a) in einem Zentralbereich (26a) des Wischlippenaufnahmekörpers (10a) angeordnet ist.

4. Wischblattverpackungsvorrichtung nach einem der vorhergehenden Ansprüche, **dadurch gekennzeichnet, dass** der zumindest eine Wischlippenaufnahmekörper (10a) von einer lang gestreckten nutbildenden Schiene (34a) gebildet ist.

5. Wischblattverpackungsvorrichtung nach einem der vorhergehenden Ansprüche, **dadurch gekennzeichnet, dass** der zumindest eine Wischblattaufnahmekörper (10a) und das zumindest eine Verbindungselement (16a) und/oder das zumindest eine Verbindungselement (16a) und der zumindest eine Abstützkörper (14a) einstückig ausgebildet sind.

6. Wischblattverpackungsvorrichtung nach einem der vorhergehenden Ansprüche, **dadurch gekennzeichnet, dass** der zumindest eine Wischlippenaufnahmekörper (10a) eine zweite wischlippenseitige Auflagefläche (42a) zu einer Lagerung eines Wischblatts (12a) aufweist, die von der ersten Auflagefläche (20a) durch einen auflagefreien Teilbereich (38a) getrennt ist.

7. Wischblattverpackungsvorrichtung nach einem der vorhergehenden Ansprüche, **dadurch gekennzeichnet, dass** zumindest eine der Gegenanschlagflächen (22a) in einer Längsrichtung (52a) versetzt zu zumindest einer der Auflageflächen (20a) angeordnet ist.

8. Wischblattverpackungsvorrichtung nach einem der vorhergehenden Ansprüche, **dadurch gekennzeichnet, dass** der Wischlippenaufnahmekörper (10a) zumindest zwei unterschiedliche Wandstärken aufweist.

9. System mit einer Wischblattverpackungsvorrichtung nach einem der vorhergehenden Ansprüche und mit einem Wischblatt (12a - 12c).

## Claims

1. Wiper blade packaging device which has at least one wiper lip receiving body (10a-10c) which has at least one wiper lip receiving region (28a-28c) and at least one first wiper-lip-side supporting surface (20a-20c), and which is provided for an open mounting of a wiper blade (12a-12c), **characterized by** at least one first and one second supporting body (14a-14c, 56a-56c) which in each case form at least one counter stop surface (22a-22c) to the first supporting surface (20a-20c), and at least one first and one second connecting element (16a-16c, 18a-18c) which, in at least one operating state, couples the first supporting surface (20a-20c) to the counter stop surface (22a-22c), wherein the second connecting element (18a) is spaced apart from the first connecting element (16a) by an intermediate region (30a) which is provided for receiving a wiper blade adapter (32a) fastened to a wiper blade (12a).

2. Wiper blade packaging device according to Claim 1, **characterized in that** the at least one connecting element (16a) is designed as a retaining clip.

3. Wiper blade packaging device according to Claim 1 or 2, **characterized in that** the at least one connecting element (16a) is arranged in a central region (26a) of the wiper lip receiving body (10a).

4. Wiper blade packaging device according to one of the preceding claims, **characterized in that** the at least one wiper lip receiving body (10a) is formed by an elongate, groove-forming rail (34a).

5. Wiper blade packaging device according to one of the preceding claims, **characterized in that** the at least one wiper blade receiving body (10a) and the at least one connecting element (16a) and/or the at least one connecting element (16a) and the at least one supporting body (14a) are formed integrally.

6. Wiper blade packaging device according to one of the preceding claims, **characterized in that** the at least one wiper lip receiving body (10a) has a second wiper-lip-side supporting surface (42a) for mounting of a wiper blade (12a), which supporting surface is separated from the first supporting surface (20a) by a support-free partial region (38a).

7. Wiper blade packaging device according to one of the preceding claims, **characterized in that** at least one of the counter stop surfaces (22a) is arranged offset in a longitudinal direction (52a) from at least one of the supporting surfaces (20a).

8. Wiper blade packaging device according to one of the preceding claims, **characterized in that** the wiper lip receiving body (10a) has at least two different wall thicknesses.

9. System with a wiper blade packaging device according to one of the preceding claims and with a wiper blade (12a-12c).

## Revendications

1. Dispositif d'emballage pour un balai d'essuieglace qui présente au moins un corps de réception de lèvre de balai d'essuie-glace (10a-10c), qui présente au moins une région de réception de lèvre de balai d'essuie-glace (28a-28c) et au moins une première surface d'appui (20a-20c) du côté de la lèvre de balai d'essuie-glace, et qui est prévu pour le support ouvert d'un balai d'essuie-glace (12a-12c), **caractérisé par** au moins un premier et un deuxième corps de support (14a-14c, 56a-56c), qui forment à chaque fois au moins une surface de butée conjuguée (22a-22c) à la première surface d'appui (20a-20c), et au moins un premier et un deuxième élément de connexion (16a-16c, 18a-18c) qui, au moins dans un état de fonctionnement, accouplent la première surface d'appui (20a-20c) aux surfaces de butée conjuguées (22a-22c), le deuxième élément de connexion (18a) étant espacé du premier élément de connexion (16a) par une région intermédiaire (30a) qui est prévue pour recevoir un adaptateur de balai d'essuie-glace (32a) fixé à un balai d'essuie-glace (12a).

2. Dispositif d'emballage pour un balai d'essuie-glace selon la revendication 1, **caractérisé en ce que** l'au moins un élément de connexion (16a) est réalisé sous forme d'étriers de retenue.

3. Dispositif d'emballage pour un balai d'essuie-glace selon la revendication 1 ou 2, **caractérisé en ce que** l'au moins un élément de connexion (16a) est disposé dans une région centrale (26a) du corps de réception de lèvre de balai d'essuie-glace (10a).

4. Dispositif d'emballage pour un balai d'essuie-glace selon l'une quelconque des revendications précédentes, **caractérisé en ce que** l'au moins un corps de réception de lèvre de balai d'essuie-glace (10a) est formé par un rail (34a) formant une rainure allongée.

5. Dispositif d'emballage pour un balai d'essuie-glace selon l'une quelconque des revendications précédentes, **caractérisé en ce que** l'au moins un corps de réception de balai d'essuie-glace (10a) et l'au moins un élément de connexion (16a) et/ou l'au moins un élément de connexion (16a) et l'au moins un corps de support (14a) sont réalisés d'une seule pièce.

6. Dispositif d'emballage pour un balai d'essuie-glace selon l'une quelconque des revendications précédentes, **caractérisé en ce que** l'au moins un corps de réception de lèvre de balai d'essuie-glace (10a) présente une deuxième surface d'appui (42a) du côté de la lèvre de balai d'essuie-glace pour un support d'un balai d'essuie-glace (12a), laquelle est séparée de la première surface d'appui (20a) par une région partielle sans appui (38a).

7. Dispositif d'emballage pour un balai d'essuie-glace selon l'une quelconque des revendications précédentes, **caractérisé en ce qu'**au moins l'une des surfaces de butée conjuguées (22a) est disposée de manière décalée dans une direction longitudinale (52a) par rapport à au moins l'une des surfaces d'appui (20a).

8. Dispositif d'emballage pour un balai d'essuie-glace selon l'une quelconque des revendications précédentes, **caractérisé en ce que** le corps de réception de lèvre de balai d'essuie-glace (10a) présente au moins deux épaisseurs de paroi différentes.

9. Système comprenant un dispositif d'emballage pour un balai d'essuie-glace selon l'une quelconque des revendications précédentes et un balai d'essuie-glace (12a-12c).
